**Europäisches Patentamt**

(19) **European Patent Office**

**Office européen des brevets**

(11) Publication number : **0 345 197 B1**

# (12) EUROPEAN PATENT SPECIFICATION

(45) Date of publication of patent specification :
27.12.91 Bulletin 91/52

(51) Int. Cl.⁵ : **E03D 1/32**, E03D 5/09,
F16K 31/26

(21) Application number : **89500051.1**

(22) Date of filing : **28.04.89**

(30) Priority : 29.04.88 ES 8801343

(43) Date of publication of application :
06.12.89 Bulletin 89/49

(45) Publication of the grant of the patent :
27.12.91 Bulletin 91/52

(84) Designated Contracting States :
AT BE CH DE FR GB IT LI NL SE

(56) References cited :
EP-A- 0 051 043
EP-A- 0 182 663

(54) Mechanism for the filling and discharge of the water tank of a toilet.

(73) Proprietor : Garcia de Couto, Manuel
San Lorenzo de El Escorial Medinaceli, 35
Madrid (ES)

(72) Inventor : Garcia de Couto, Manuel
San Lorenzo de El Escorial Medinaceli, 35
Madrid (ES)

(74) Representative : Aymat Gonzalez, José Maria
AYMAT, S.L. Hortaleza, 37
E-28004 Madrid (ES)

EP 0 345 197 B1

Jouve, 18, rue Saint-Denis, 75001 PARIS

## Description

This invention relates to a simplified mechanism to fill and discharge the water tank of toilets. It has been conceived as a mechanical assembly placed inside the upper or lower tank of a toilet, and operative from the outside so that the discharge is accomplished through the combined action of a operating lever or arm and a pulling chain on the discharge float, and the action of a transverse arm having at one end an element pressing on the end part of a valve regulating the tank filling.

The patent is thus framed within the technical sector relative to mechanical devices acting as accesories in the plumbing fixture industry, intended for installation and assembly at factory or on site, which may be substituted or replaced at any time, either partially or in full.

The current state of the art, as known by the applicant, supposes the initial existence of a variety of direct acting mechanisms of a external operating handle on a lever which vertically drives and actuates a rod having at its lower end a device which is preferrably hemispherical in shape, to close the discharge, while the upper part of the axle acts either directly or through the action of a floater, on the water inlet mechanism, causing a progressive decrease of its opening during the filling operation of the tank.

An evolution of such a traditional conception was represented by the Spanish patent No. 8702493 of the same applicant for this invention, which contributed the novelty of a system to move the water discharge mechanism by pivoting and traction tilted on the discharge float, and a specific water inlet mechanism.

Later, through the Spanish patent No. 8801307, the system was improved with a design featuring a double chain that concurrently drives the tank filling and discharge mechanisms.

The present Patent develops a mechanism that, in any one of its two external operating alternatives, i.e. the operating lever 2 or the operating arm 2A, drives the pulling chain 3 that lifts and causes the discharge float 4 to float, in order to allow and cause the discharge of the water contained in the tank of the toilet. This discharge causes a decline in the water level in the tank, which in turn forces a drop by gravity of the float 10, which through the arm 11 attached to it, acts on the splash cover 9, which projecting part 94 exerts pressure on the emerging part 71 of the valve 7 to insert it in the inner chamber 61 of the valve base 6, thus opening the inlet of water into the tank to allow a new refilling. Once the water discharge has been completed, the discharge float 4 stops floating and falls by gravity to close the water outlet again, thereby allowing a refilling of the tank, which takes place until the continued rising of the water level causes the floater 10 to float, and upon reaching the maximum level anticipated it stops pressing on the emerging part 71 of the valve 7, which is left free to automatically close the water intake due to the pressure exerted on it by the water incoming from the water supply system.

A pefect sealing of the inlet mechanism is achieved by the coupling of the cone-shaped portion 72 of the valve 7 with the internal coneshape surface of the valve base 6 in front of it. A pressure reducer 8 reduces the water pressure at the inlet when the service pressure is excesive, this reducer 8 being installed fixed inside the valve base 6, and through the end of said base it receives the water coming from the supply system.

In order to better understand the purpose of this invention, this description is accompanied by a series of drawings representing in a schematical manner a preferred and no limitative embodiment, to accomplish the mechanism in each operating modality, in which :

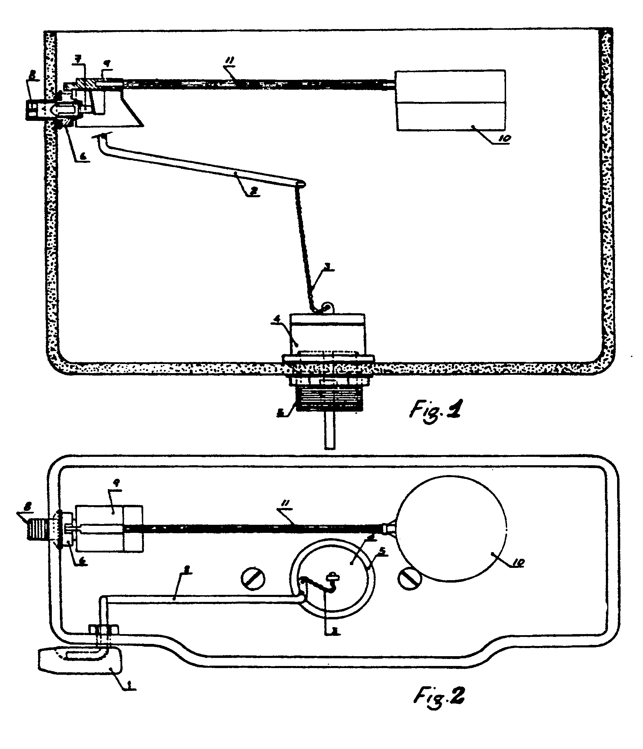

Figure 1 and Figure 1A shows a longitudinal and vertical section of the water tank, showing the mechanical assembly fully mounted and in its normal operating position.

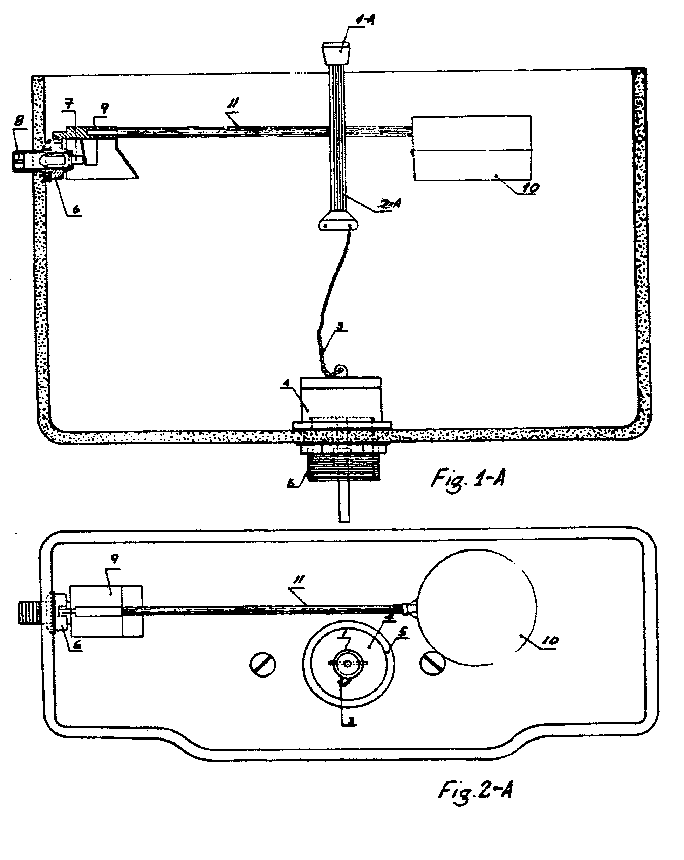

Figure 2 and Figure 2A is a plan view showing the mechanical assembly fully mounted and in its normal operating position.

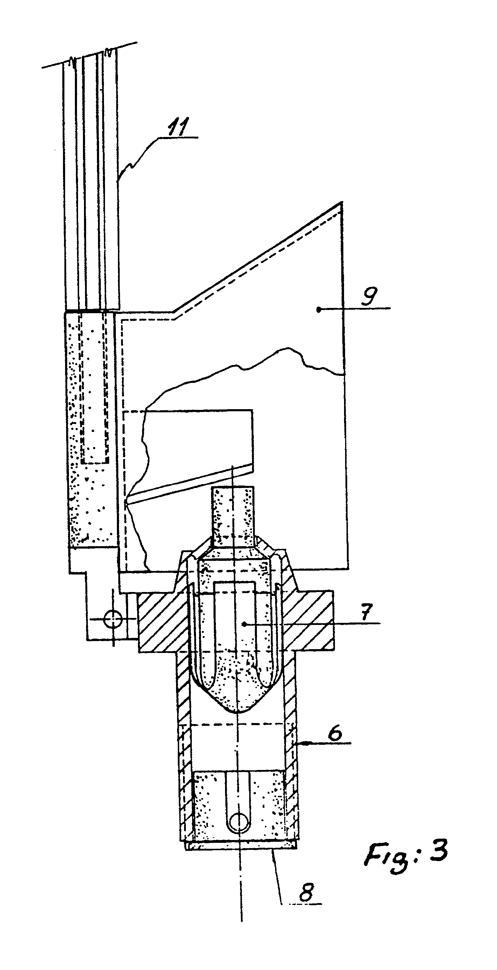

Figure 3 shows the assembled component of the water tank intake system.

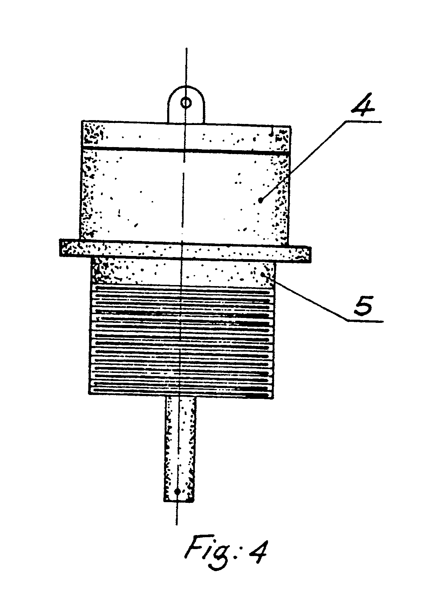

Figure 4 shows the componed forming the tank water discharge.

Figure 5 shows a top view of the operating lever.

Figure 6 represents a side view of the said lever.

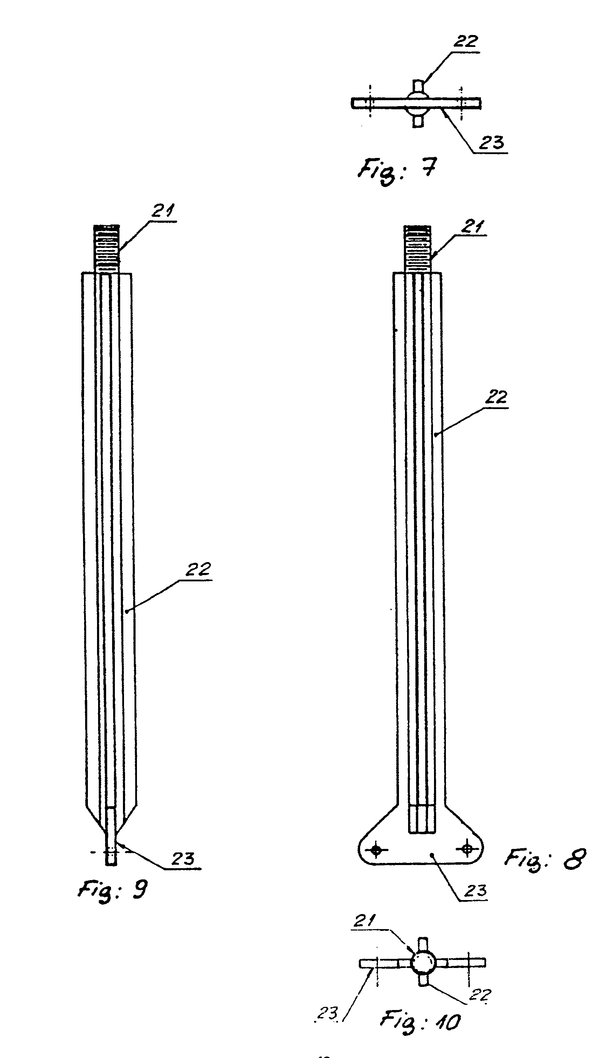

Figure 7 shows a lower view of the operating arm.

Figure 8 represents a front elevational view of said arm.

Figure 9 represents a side elevationed view of the operating arm.

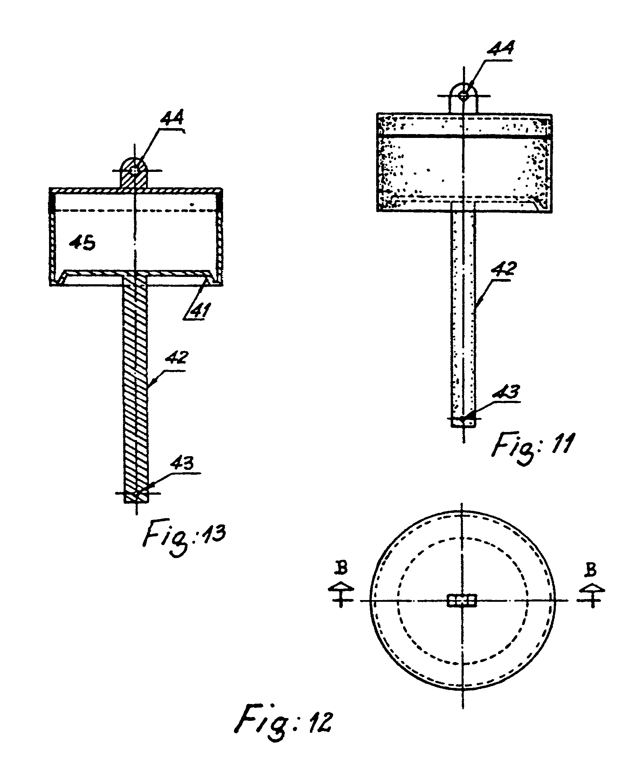

Figure 10 shows a top view of the operating arm.

Figure 11 represents a side elevational view of the discharge float.

Figure 12 shows the upper plan of same.

Figure 13 shows an axial vertical section of the discharge float.

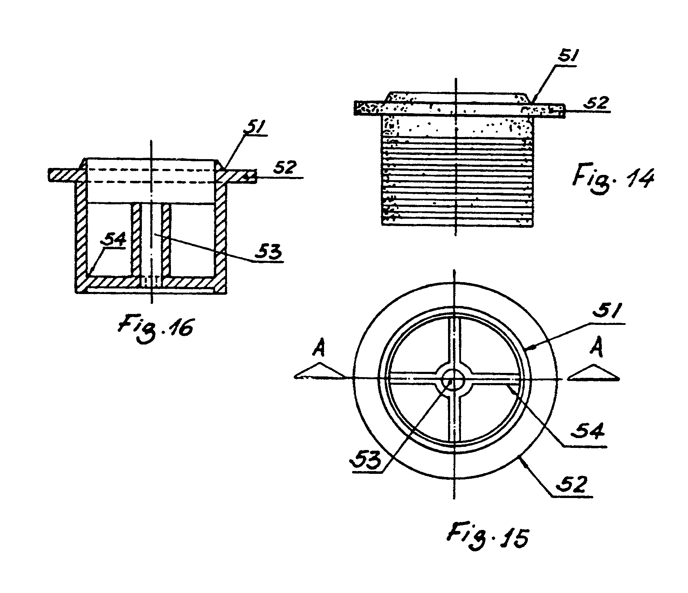

Figure 14 represents a general side elevation view of the float base.

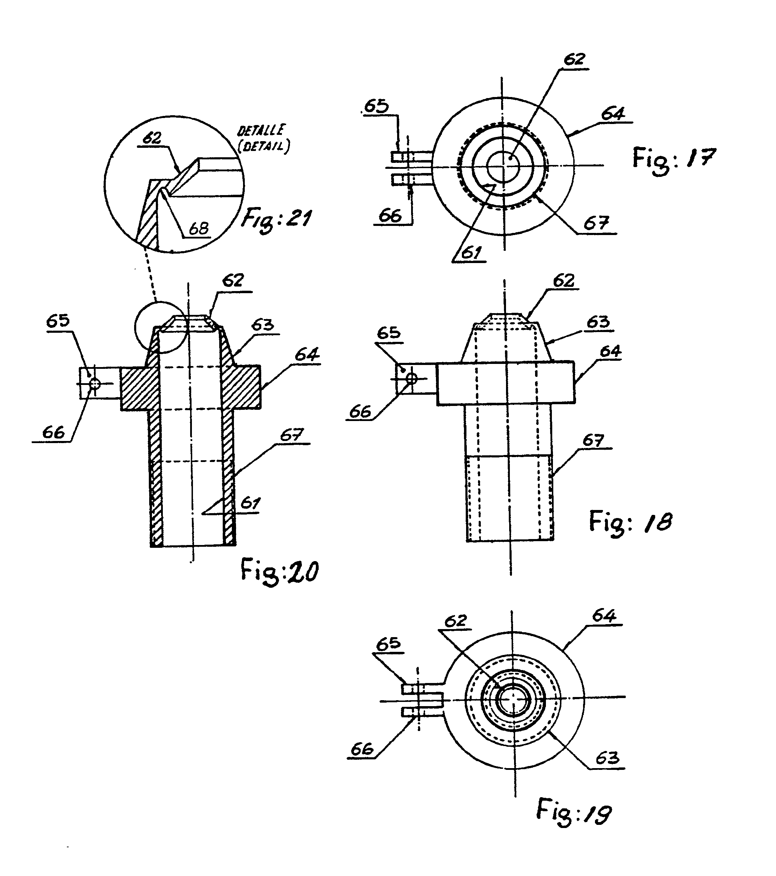

Figure 15 shows a plan view of same.

Figure 16 represents an axial vertical section.

Figure 17 shows a lower plan view of the valve base.

Figure 18 represents a general side elevation view.

Figure 19 shows a plan view of the base.

Figure 20 represents an axial vertical section.

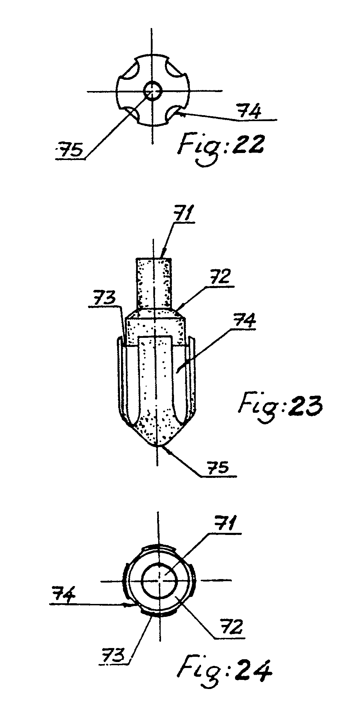

Figure 21 shows a detail of the emerging end of the valve base.

Figure 22 shows a lower plan view of the valve.

Figure 23 represents a general side elevational view.

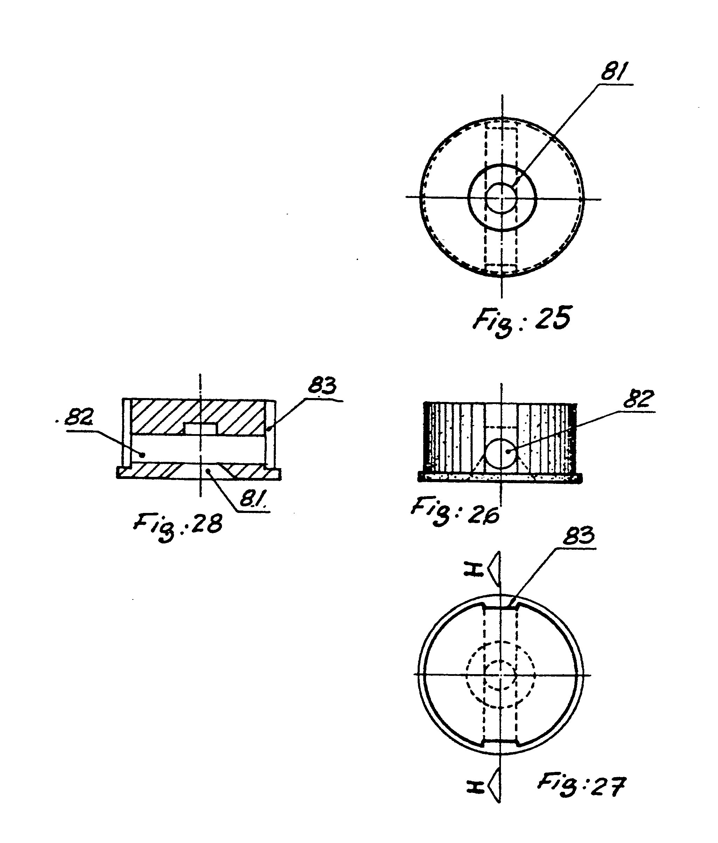

Figure 24 shows a plan view of the valve.

Figure 25 represents a lower plan view of the pressure reducer.

Figure 26 is a general side elevational view of the pressure reducer.

Figure 27 shows a top plan view of the reducer.

Figure 28 represents an axial vertical section.

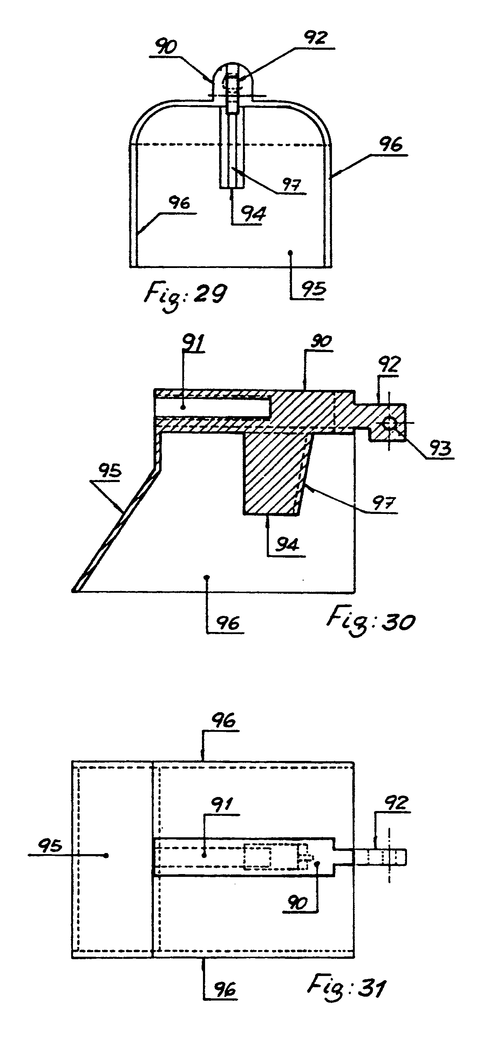

Figure 29 represents a side elevational view of the splash cover.

Figure 30 is an axial vertical section of same.

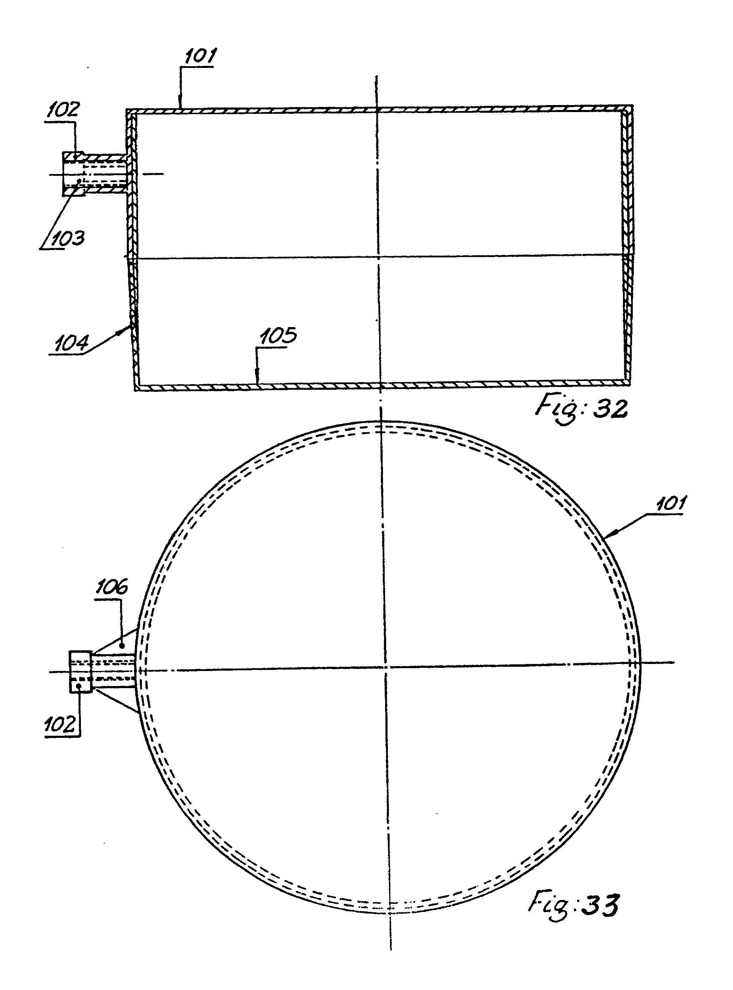

Figure 31 shows a top plan view of same.

Figure 32 represents an axial vertical section of the floater.

Figure 33 shows a top plan view of same.

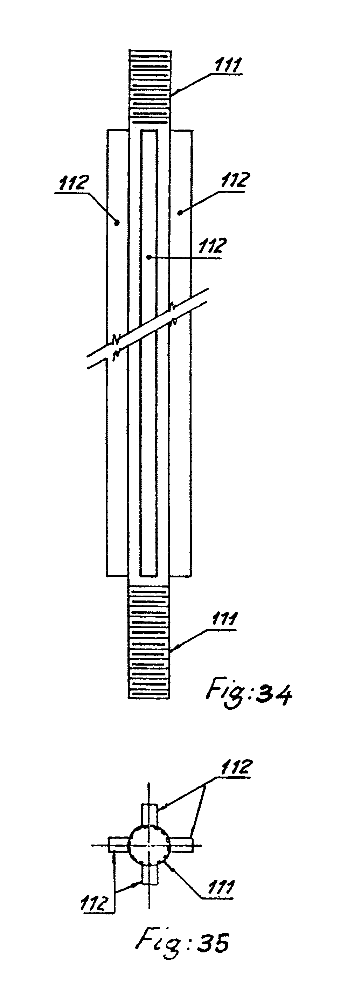

Figure 34 represents a general side elevational view of the arm.

Figure 35 shows a lower or top plan view of same.

In accordance with the foregoing, this is a mechanical assembly for filling and discharging the water tank of toilets, to carry out the flushing operation usual in toilets.

This is a simplified version of the previously existing mechanisms, increasing the efficiency and safety of operation, and made up by a reduced number of simple parts, which in association with the drawings represented in the attached sheets, are individually described and detailed below :

The operating handle or knob 1 is the only external element of the mechanism, which traditionally serves to manually actuate same. It has a hollow space appropiate to hold and anchor the end 25 of the operating lever 2 or the end 21 of the operating knob 2A.

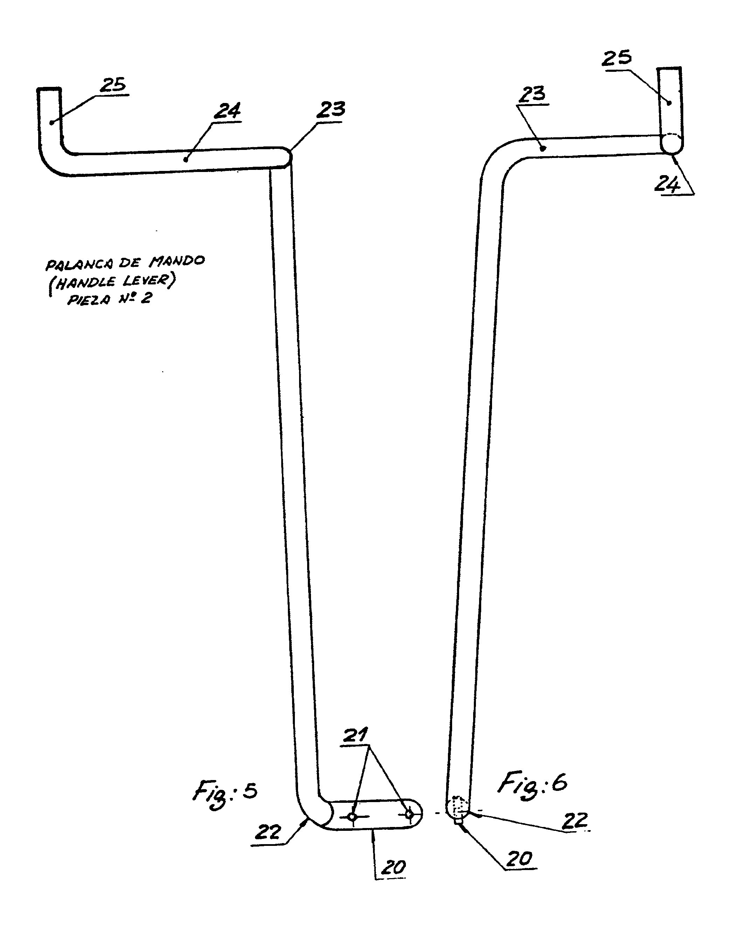

The operating lever 2 is a four-time-bent rod, which has the irregular shape shown in Figure 5, from its upper straight and horizontal end 25, inserted and fixed within the operating handle 1, its shape is configured as follows : At the point where it departs from the operating handle 1, there occurs the first bend at 90°on a horizontal plan ; then a straight and horizontal section 24 follows, after which there is the second bend at 90°from horizontal to vertical ; next there is a vertical section 23, at which end the third bend, is found slightly over 90° ; which is from vertical to inclined and straight, until it arrives to the fourth and last bend 22 at 90° ; slightly tilted to horizontal, and finally ending in a straight and horizontal portion 20 of the rectangular section provided with holes 21 to anchor a pulling chain 3.

The operating arm 2A is intended to directly transmit the action from the operating knob 1 to the pulling chain 3. Its upper end is threaded to receive the operating knob 1, and its lower end is flat and provided with holes to anchor the pulling chain 3. At the center, it has four protruding reinforcements which are continous and longitudinal, placed diametrically opposite each other.

The pulling chain 3 is a traditional chain, made out of metal, plastic or nylon thread.

The discharge float 4 is a floating cylinder-shaped, element consisting of a top cap and a bottom main body. The assembly of both parts is fixed and permanent, with water-tight sealing to maintain chamber 45 free from water. Centrally on the upper cap, there is a projecting part 44 with an orifice to hold the pulling chain 3. Perimetrically on the bottom external surface of the chamber, it has a continuous triangular-section flange 41 having the appropriate and matching conicity to achieve a water-tight sealing between this part 41 and the corresponding portion 51 of part No. 5, which accomodates it in the closed discharge position. At the center, on the lower external surface of the chamber, the axle-guide 42 protrudes which lower end has a transversal through orifice 43 to place a stop pin that prevents the wole assembly from getting out of its operating position.

The float base 5 is a cylinder-shaped part that is fixed to the tank bottom at the point of discharge. It is provided with an external thread at its bottom end to be fixed with a traditional nut. At its top end, it is provided with an external, protruding and surrounding round projection 52 to serve as a seat and fixing stop. At its top end it has a continuous and protruding triangular-section flange 51 having proper conicity to achieve a water-tight sealing between this part 51 and the corresponding part 41 of float 4 when the assembly is in the "closed draining" position. In its internal lower part it has a central, cylinder-shaped guide-box 53 which is fixed and attached to the main body through the radiuses 54. This guide-box serves to guide the vertical movement of the axle 42 of float 4.

The valve base 6 is a tubular-shaped part with and external solid ring having a major diameter 64 from which two equal projections protrude 65, each having a concentric orifice 66. From the ring on 64, the external surface gradually decreases in diameter, forming two successive and different cones 62 and 63, until reaching the end orifice which allows the passage of water to the tank. At the water inlet end, it is provided with exterenal threading 67 to serve the double purpose of being fixed to the tank by means of a traditional nut, and receiving the coupling to the water supply system. All its inner portion is cylinder-shaped up to the point it reaches the circular channel 68, from which it gradually reduces in a conical shape until reaching the end orifice which allows the water to pass onto the tank.

The valve 7 is a solid, cylinder-shaped part, having three different diameters, with a truncated-cone shape 72 between the two smaller diameters. Between its two larger diameters there is a circular channel 73. The end of the part having the largest diameter is cone like finish, with a rounded top 75. Throughout the external length of the part having the largest diameter, there are four or more channels placed diametrically opposite each other 74, which gradually allow the passage of water.

The pressure reducer 8 is a plug that fits tightly and permanently in the valve base 6, having a cylinder shape with a ring protruding at the lower end that serves as a stop on the valve base 6 which accomodates it. Said plug has an upgoing, vertical orifice at its lower center which does not reach the top end, where it is covered or blind. The lower inlet of the mentioned orifice is expanded in a conical shape 81. Another orifice 82 is arranged horizontally and diametrically with full lengtwise passage to remain open at both ends. On the external cylinder-shaped surface of the pressure-reducing plug, and starting from each of the two ends of the horizontal orifice 82, there is an upgoing vertical channel 83 that reaches the top end.

The operation or function of the pressure-reducing plug is, its name indicates, to reduce the presure of the water coming from the supply line when the service pressure is excessive.

The splash cover 9 prevents inflowing water from splashing. It is closed on both external sides 96, on top and its front surface 95. Its internal top side presents a projection having the shape of an irregular trapezoid 94, with one of its sides 97 beveled on both surfaces, throughout its length.

On the upper external surface of the splash cover 9 there is a solid longitudinal projecting block 90 having a bring longitudinal orifice 91, threaded or otherwise, intended to anchor the arm 11. The other end of the block 90 has a projecting arm provided with a hole 93 so that it may be assembled with the corresponding parts 65 of the valve base 6.

The float 10 has a hollow cylindrical sealed shape both ends 101 and 105 and it consists of two complementary parts that when coupled keep the internal chamber water-tight. At its external upper lateral part, and place in a radial position, it has a reinforced tubular projection 106 and 102. Its central orifice is blind 103 and may be internally threaded or not in order to receive the axle 11.

The arm 11 is a solid part formed by a central core having the shape of a cylindrical claw and its two ends may be threaded or not 111. Throughout the length of the unthreaded portion it has four rectangular-section reinforcements 112 placed diametrically opposite each other. This arm is fixed between the splash cover 9 and the float 10.

The above described mechanism may be industrialized through the mechanization of a series or sufficiently hard components capable of being assembled, made out of metal or other material and other components (for example the discharge float 4 and float 10) may be lighter materials (such as plastics or alveolar compounds), forming a series of elements to be mounted in the toilet tank once this has been placed in its final location or previously at factory.

## Claims

1. A simplified mechanism for filling and discharging the water tank of a toilet, basically consisting of three main assemblies to control the water inlet, to control the discharge of same, and the operating set, characterised in that it has a component to control the water inlet into the tank, consisting of a valve base (6) fixed onto the lateral upper part of the tank, that carries the base and mechanism for the water inlet, the water inlet closing by lack of float (10) pressure on the valve (7) ; the valve base (6) is a tubular part with an external solid ring (64) having a major diameter from which there protrude two equal projections (65) having a concentric orifice (66) and the external surface decreasing in diameter to conform two successive and different cones (62, 63) up to the external orifice (67) to allow the passage of outflowing water between the piping and the tank ; the inside of the valve base (6) is cylinder-shaped, continuing in a truncated cone shape up to the end orifice which allows the passing of water into the tank ; the valve base (6) has fixed pressure reducer (8), with a valve (7) inside, which actuates and operates both with the water pressure and through the pressure on the front end of the splash cover (9) attached to the arm of the float (10); the component controlling the discharge of water from the tank has a float (4) that carries a pulling chain (3) this pulling chain (3) being fixed to the operating assembly through the operating lever (2) or arm (2A).

2. A simplified mechanism for filling and discharging the water tank of toilets, according to claim 1, characterised in that the component controlling the discharge of water from the tank has a float base (5) fastened to the tank that can be closed by actuating the external handle (1) or (1A), which turns the operating lever (2) or arm driving (2A) a pulling chain (3), which moves vertically the discharge float (4) to discharge the water, which the float base (5) is closed when the float (4) drops by gravity when the tank empties.

3. A simplified mechanism for filling anti discharging the water tank of toilets, according to claim 1, characterised in that the operating assembly has an external handle (1) to actuate an operating lever (2), which turning is transmitted to a pulling chain (3), vertically sliding same to actuate and open the discharge of water from the tank onto the toilet bowl.

4. A simplified mechanism for filling and discharging the water tank of toilets, according to claim 1, characterised in that the operating assembly works alternatively through a vertical operating arm (2A) actuated by an external knob (1A) that slides the operating arm (2A) and the lower pulling chain (3), vertically actuated on the float (4) to discharge the water.

5. A simplified mechanism for filling and discharging the water tank of toilets, according to any one of the foregoing claims, characterised in that the operating assembly actuates through a lever or arm a pulling chain (3) that causes the discharge float to float (4), thus opening the discharge of water ; the decreasing water level in the tank moves the float (10) by gravity, and thorough its arm (11) transmits a turning movement to the splash cover (9), which back projection presses on the emerging pivot of the valve (7), inserting it in the internal chamber of the valve base (6), oponing it to allow the water inlet and the tank filling.

6. A simplified mechanism for filling and discharging the water tank of toilets, according to claims 1 and 5, characterised in that after discharging the water in the tank, the discharge float (4) drops by gravity, closing the outlet, allowing the filling of the tank until it reaches its top level, moving the float (10) to its top end, driving the arm (11) to the horizontal position and ceasing to put pressure on the emerging portion of the valve (7), which automatically closes the water inlet through its own pressure and by coupling of the external cone-shaped surface of the valve (7) with the corresponding internal cone-shaped surface of the valve base (6), which has attached to it a pressure reducer (8) at the end through which it is connected to the water supply line.

**Patentansprüche**

1. Mechanismus zum Füllen und Entleeren des Wassertanks einer Toilette, grundlegend bestehend aus drei Hauptgruppen für die Kontrolle des Entleerens desselben, und der Gruppe zur Betätigung, dadurch gekennzeichnet weil sie über eine Gruppe für die Kontrolle des Wassereintrittes in den Behälter verfügt, bestehend aus einem Ventilträger (6) befestigt am oberen Teil der Seitenwand des Behälters, das den Ventilträger und den Mechanismus für den Wassereintritt trägt, wobei der Wassereintritt abgesperrt wird durch das Nachlassen des Druckes des Schwimmers (10) auf das Ventil (7) ; Der Ventilhälter (6) ist ein rohr förmiges Teil mit einem massiven (64) Aussenring mit grösserem Durckmesser von dem verschiedene gleiche Ausgänge (65) abgehen versehen mit einer konzentrischen Bohrung (66) und unter Minderung des Durchmessers der äusseren Fläche unter Bildung von zwei aufeinander folgenden und unterschiedlichen Kegeln (62, 63) bis zur äusseren Öffnung (67) für den Durchfluss des Was sers zwischen dem Wasserrohr und dem Behälter ; das Innere des Ventilträgers (6) ist zylindrisch, und geht in tronkonischer Form bis zur Endöffnung, die den Durchgang vom Wasser zum Behälter zulässt ; Der VCentilträger (6) besitzt einen festen Druckminderer (8) in dessen Innerren ein Ventil (7) angebracht ist, das sowohl unter Einfluss des Wasserdruckes wie auch unter dem Druck des Prelldeckels (9) verbunden mit dem Arm des Schwimmers (10) ; Die Gruppe für die Kontrolle des Eintrittes des Wassers zum Behälter besitzt eine Boje (4), die eine Zugkette (3) besitzt, Zugkette (3) die mit der Gruppe zur Betätigung verbunden ist durch den Hebel (2) oder durch den Arm (2A).

2. Mechanismus zum Füllen und Entleeren des Wassertanks einer Toilette, nach Anspruch 1, gekennzeichnet weil die Gruppe zur Kontrolle des Entleerens vom Wasser des Behälters über einen am Behälter be festigten Bojeenhalter (5) verfügt der geschlossen werden kann durch die Betätigung der aussen liegenden Griffkurbel (1) oder (1A), durch das Ziehen des Hebels (2) oder Armes (2A) über eine Zugkette (3), welche die Boje (4) in vertikaler Richtung bewegt für die Entleerung des Wassers, wobei der Bojenlahter (5) durch das Absinken durch Schwekraft der Boje (4) beim Entleeren des Behalters geschlossen wird.

3. Mechanismus zum Füllen und Entleeren des Wassertanks einer Toilette nach Anspruch 1, dadurch gekennzeichnet, dass die Gruppe zur Betätigung über eine aussen liegende Griffkurbel verfügt, welche einen Betätigungshebel (2) bewegt dessen Drehung auf die Zugkette (3) übertragen wird und diese in senkrechter Richtung bewegt um das Entleeren des Wassers aus dem Behälter in das Klosettbecken zu betreiben.

4. Mechanismus zum Füllen und Entleeren des Wassertanks einer Toilette, nach Anspruch 1, dadurch gekennzeichnet, dass die Betätigungsgruppe wechselweise funktioniert, mittels eines vertikalen Betätigungsarms (2A) betätigt über eine aussen liegende Ziehvorrichtung (1A), die den Betätigungsarm (2A) und die untere Zugkette (3) verstellt und dabei in senkrechter Richtung auf die Boje (4) für das Entladen des Wassers in das Klosettbecken einwirkt.

5. Mechanismus zum Füllen und Entleeren des Wassertanks einer Toilette, nach den vorhergehenden Ansprüchen, dadurch gekennzeichnet, dass die Betätigungsgruppe mittels eines Hebels oder Armes eine Zugkette (3) bewegt welche die Entleerungsboje (4) zum Schwimmen bringt und dadurch das Ausfliessen des Wassers des Behälters in das Klosettbecken verursacht, wobei das Absinken des Niveaus im Behälter den Schwimmer (10) durch Schwer kraft verstellt der über seinen Arm (11) eine Drehbewegung des Prelldeckels (9) verursacht dessen überstehender Hinterteil auf den herausragenden Zapfen des Ventils (7) drückt und diese in die innere Kammer des Ventilhalters (6) hineintreibt, wodurch das Öffnen erzielt wird für den Eintritt des Wassers in den Behälter und das Auffüllen desselben.

6. Mechanismus zum Füllen und Entleeren des Wassertanks einer Toilette, nach den Ansprüchen 1 und 5 dadurch gekennzeichnet, dass nach Beendigung des Entleerens des Wassers des Behälters die Boje (4) für das Entleeren durch Schwerkraft absinkt und dadurch die Abflussöffnung verschliesst und das

emeute Füllen des Behältes bis zum oberen Niveau ermöglicht und dabei den Schwimmer (10) nach oben bis zur höchsten Lage bewegt und den Arm (11) in horizontaler Lage bringt und dieser keinen Druck mehr ausübt auf den herausragenden Teil des Ventils (7) das automatisch den Eintritt des Wassers sperrt durch Eigendruck desselben und durch die Einkupplung der äusseren konischen Fläche des Ventils (7) mit der entsprechenden inneren konischen Fläche des Ventilträgers (6), der einen Druckminderer (8) besitzt im Endteil zum Anschluss an das Wassernetz.

## Revendications

1. Mécanisme de remplissage et de décharge du réservoir d'une toilette composé fondamentalement de trois groupes principaux pour le contrôle de l'entrée de l'eau, pour le contrôle de l'écoulement de l'eau et le groupe de commande, se caractérisant en ce qu'il comporte un groupe de contrôle de l'entrée de l'eau dans le réservoir composé d'un siège de soupape (6) fixé sur la partie supérieure latérale du réserqui porte le siège et le mécanisme d'entrée d'eau, l'entrée d'eau étant obturée lorsque cesse la pression du flotteur (10) sur la soupape (7) ; le siège de soupape (6) est une pièce tubulaire comportant une bague ou anneau massif (64) extérieur d'un plus grand diamètre d'où partent des épaulements égaux (65) munis d'une perforation concentrique (66) le diamètre de la surface extérieure se réduisant en configurant deux cones successifs et différents (62, 63) jusqu'à l'orifice externe (67) de passage de la sortie d'eau entre la conduite ou tuyau et le réservoir de la chasse d'eau ; l'intérieur du siège de soupape (6) est cylindrique et se prolonge sous forme tronconique jusqu'à l'orifice extrême qui ouvre la voie à la sortie d'eau dans le réservoir ; le siege de soupape (6) a un réducteur de pression fixe (8) à l'intérieur du quel est disposée une soupape (7) qui est actionnée et fonctionne aussi bien sous la pression de l'eau que sous la pression de l'extrémité frontale du bandage de choc ou culbuteur (9) relié au bras du flotteur (10) ; le groupe de contrôle de la chasse d'eau ou d'écoulement de l'eau du réservoir comporte une bouée (4) qui porte la chaîne de la casse d'eau (3), laquelle est fixée sur le groupe de commande par l'intermédiaire de la tige (2) ou bras (2A) de commande.

2. Mécanisme de remplissage et de décharge du réservoir d'une toilette, selon la revendication 1, se caractérisant en ce que le groupe de controle du refoulement ou écoulement de l'eau du réservoir comporte une embase de bouée (5) fixée sur le réservoir et qui est obturée en actionnant la manivelle extérieure (1) ou (1A5, la tige de commande (2) ou bras (2A) exerçant une traction sur la chaîne-tirant (3) qui déplace verticalement la bouée (4) pour le refoulement de l'eau, l'embase de la bouée (5) étant obturée par la descente par gravité de la bouée (4) lorsque le réservoir se vide.

3. Mécanisme de remplissage et de décharge du réservoir d'une toilette, selon la revendication 1, se caractérisant en ce que le groupe de commande dispose d'une manivelle extérieure qui actionne une tige de commande (2A) laquelle actionne à son tour la chaîne-tirant (3) en la déplaçant verticalement pour actionner et faire que s'écoule l'eau du réservoir dans la cuvette des cabinets.

4. Mécanisme de remplissage et de décharge du réservoir d'une toilette, selon la revendication 1, se caractérisant en ce que le groupe de commande fonctionne alternativement au moyen d'un bras de commande (2A) vertical actionné par une tirette extérieure (1A), laquelle déplace le bras de commande (2A) et la chaîne-tirant inférieure (3), en agissant verticalement sur la bouée (4) d'écoulement de l'eau dans la cuvette des cabinets.

5. Mécanisme de remplissage et de décharge du réservoir d'une toilette, selon les revendications précédentes, se caracterisant en ce que le groupe de commande actionne, à l'aide d'une tige ou d'un bras de commande, une chaîne-tirant (3) qui met en flottaison la bouée (4) de déversement de l'eau du réservoir de la chasse d'eau dans la cuvette des cabinets dont la baisse de niveau dans le réservoir déplace le flotteur (10) par gravité, en transmettant, par l'intermédiaire de son bras (11), un mouvement de rotation au bandage de choc (9) dont la partie saillante postérieure exerce une pression sur le pivot émergeant de la soupape (7) en introduisant cette dernière dans la chambre ou boîtier interne de son siège de soupape (6) et en entraînant son ouverture pour permettre l'entrée de l'eau dans le réservoir et son remplissage.

6. Mécanisme de remplissage et de décharge du réservoir d'une toilette, selon les revendications 1 et 5, se caractérisant en ce que, lorsque l'eau du réservoir s'est écoulée, la bouée (4) de déversement descend par gravité en obturant sa sortie, ce qui permet le remplissage du réservoir jusqu'à son niveau supérieur ; en déplaçant le flotteur (10) jusqu'à son extrémité supérieure, entraînant le bras (11) en position horizontale et cessant d'exercer toute pression sur la partie émergente de la soupape (7) qui ferme automatiquement l'entrée d'eau sous la prope pression de l'eau et du fait de l'accouplement de la surface conique interne correspondante du siege de soupape (6) sur lequel est fixé un réducteur de pression (8) à l'extrémité par laquelle il est raccordé au réseau d'approvisionnement.

Fig.1

Fig.2

Fig. 1-A

Fig.2-A

*11*

*9*

*7*

*6*

*8*

*Fig: 3*

Fig. 4

PALANCA DE MANDO
(HANDLE LEVER)
PIEZA Nº 2

Fig: 5

Fig: 6

22

23

*Fig: 7*

21

22

23

*Fig: 9*

21

22

22

23

*Fig: 8*

21

22

23

*Fig: 10*

Fig: 13

Fig: 11

Fig: 12

Fig. 14

Fig. 15

Fig. 16

DETALLE
(DETAIL)

62

68

Fig:21

62

65

64

61

67

Fig: 17

62

65

63

64

66

67

61

Fig:20

65

62

63

64

66

67

Fig: 18

62

65

64

63

66

Fig:19

Fig:22

Fig:23

Fig:24

Fig: 25

Fig: 28

Fig: 26

Fig: 27

17

90    92

96

96

97

94

95

Fig: 29

91    90

92

93

95

97

94

96

Fig: 30

96

91

92

95

90

96

Fig: 31

18

101

102

103

104

105

*Fig:* 32

106

101

102

*Fig:* 33

*111*

*112*  *112*

*112*

*112*

*111*

*Fig:34*

*112*

*112*  *111*

*Fig:35*